# EUROPEAN PATENT APPLICATION

(11) **EP 4 556 782 A1**
(43) Date of publication of application: **21.05.2025**
(21) Application number: 24781029.4
(22) Date of filing: 23.02.2024
(51) Int. Cl.: F17C 13/04, F17C 5/06, F17C 13/08

(54) **VALVE ASSEMBLY FOR CONTROLLING FLUID**

(30) Priority: 31.03.2023 KR 20230042862
(71) Applicant: Youngdo Ind. Co., Ltd., Busan 46751 (KR)
(72) Inventor: SHIN, Jin Oh, Busan 46751 (KR); KIM, Hong Min, Busan 46751 (KR)
(74) Representative: Lambacher, Michael
(86) International application number: PCT/KR2024/002366
(87) International publication number: WO 2024/205035

(57) **Abstract**

Provided is a valve assembly for controlling a fluid. The valve assembly includes: a high-pressure container for storing hydrogen gas; a first flow path that is connected to a charging unit for charging a hydrogen gas, and a gas consuming unit, so that the hydrogen gas for charge and use, passes through one flow path; a second flow path that is connected between the high-pressure container and the first flow path; a third flow path that is connected between the high-pressure container and the first flow path; a manual valve that is mounted on the first flow path to manually open and close the first flow path; a solenoid valve that is mounted on the third flow path to open and close the third flow path; a fourth flow path that is connected between the high-pressure container and the first flow path; and a bleed valve that is mounted on the fourth flow path and opens and closes the fourth flow path to discharge the hydrogen gas inside the high-pressure container through the first flow path.

## Description

### TECHNICAL FIELD

The present invention relates to a valve assembly for controlling a fluid, which controls the flow of a hydrogen gas when charging a hydrogen gas stored in a high-pressure container into another high-pressure container or supplying the hydrogen gas to a gas consuming unit.

### BACKGROUND ART

Currently, in the case of a hydrogen fuel cell system, a fluid control valve is provided in a high-pressure container storing a hydrogen gas to control the flow of the hydrogen gas when the hydrogen gas is charged into the high-pressure container, and to control the flow of the hydrogen gas, when the hydrogen gas stored in the high-pressure container is supplied to a gas consuming unit.

The fluid control valve is required to precisely control the flow of a hydrogen gas according to an electric signal, keep the pressure of fluid stored in a pressure container to be constant, and prevent explosion of a high-pressure container when a hydrogen fuel cell vehicle overturns or a fire occurs therein.

A conventional fluid control valve assembly is disclosed in Korean Patent Publication No. 10-1407015 (on June 05, 2014). The conventional fluid control valve assembly includes a first flow path mounted at an inlet of a high-pressure container and through which a charging source gas passes, a second flow path through which a supply source gas passes, and a bleed valve installed in a seventh flow path which is connected to the high-pressure container, wherein, when the bleed valve is operated, the source gas in the high-pressure container is discharged to the outside through the seventh flow path.

In this case, since the high-pressure gas in the high-pressure container is immediately discharged to the outside, stability is deteriorated, and in the case of a vehicle equipped with a hydrogen fuel cell system, high-pressure source gas is discharged into the engine room of the vehicle, thereby increasing the risk.

### DISCLOSURE

### TECHNICAL PROBLEM

Therefore, it is an objective of the present invention to provide a fluid control valve assembly capable of improving safety by preventing a high-pressure gas from being directly discharged to the outside by preventing gas discharged from a high-pressure container from being discharged to the outside when a bleed valve is operated by changing a flow path on which the bleed valve is mounted.

### TECHNICAL SOLUTION

According to an aspect of the present invention, there is provided a valve assembly for controlling a fluid, the fluid control valve assembly including: a high-pressure container in which a hydrogen gas is stored; a first flow path that is connected to a charging unit for charging the hydrogen gas into the high-pressure container and a gas consuming unit that consumes the hydrogen gas so that the hydrogen gas for charging and consuming is passed through one flow path; a second flow path connected between the high-pressure container and the first flow path to allow the hydrogen gas to be supplied to the high-pressure container during charging; a third flow path connected between the high-pressure container and the first flow path to discharge hydrogen gas stored in the high-pressure container to the gas consuming unit during consuming the hydrogen gas; a manual valve mounted on the first flow path to manually open and close the first flow path; a solenoid valve mounted on the third flow path to automatically open and close the third flow path; a fourth flow path connected between the high-pressure container and the first flow path; and a bleed valve mounted on the fourth flow path and configured to open and close the fourth flow path to discharge, through the first flow path, the hydrogen gas in the high-pressure container.

The second flow path and the third flow path may be connected to the first flow path at a rear side of the manual valve, and the fourth flow path may be connected to the first flow path at a front side of the manual valve.

When a pressure release device is mounted on the fourth flow path and the pressure of the high-pressure container is increased by the temperature, the pressure inside the high-pressure container may be discharged to the outside.

A first check valve that opens the flow of the hydrogen gas supplied to the high-pressure container and blocks an opposite flow may be mounted on the second flow path, and a second check valve that opens the flow of the hydrogen gas discharged from the high-pressure container and blocks an opposite flow may be mounted in the third flow path.

A gas discharge outlet for decompressing the high-pressure hydrogen gas discharged from the high-pressure container to a gas usage pressure and discharging the decompressed hydrogen gas may be installed in a flow path connected to the first flow path to supply hydrogen gas to the gas consuming unit, and when the bleed valve is operated in an opening direction, the high-pressure hydrogen gas discharged through the fourth flow path may pass through the first flow path and be discharged to the outside through the gas discharge outlet.

### ADVANTAGEOUS EFFECTS

As described above, the fluid control valve assembly of the present invention has the fourth flow path connected between the high-pressure container and the first flow path, and the bleed valve mounted on the fourth flow path so that the high-pressure hydrogen gas in the high-pressure container is discharged through the gas discharge outlet through which the high-pressure hydrogen gas is decompressed to the gas usage pressure through the first flow path, thereby preventing the high-pressure hydrogen gas from being directly discharged to the outside, thereby improving safety.

### BRIEF DESCRIPTION OF THE DRAWINGS

FIG. 1 is a schematic configuration diagram of a fluid control valve assembly according to an embodiment of the present invention.
FIG. 2 is a diagram illustrating a flow of gas in a fluid control valve assembly when hydrogen gas is charged according to an embodiment of the present invention.
FIG. 3 is a diagram illustrating a flow of gas in a fluid control valve assembly according to an embodiment of the present invention, when hydrogen gas is consumed.
FIG. 4 is a diagram illustrating a flow of gas in a fluid control valve assembly when a bleed valve is operated according to an embodiment of the present invention.

### BEST MODE FOR CARRYING OUT THE INVENTION

Hereinafter, embodiments of the present invention will be described in detail with reference to the accompanying drawings. The sizes and shapes of the components shown in the drawings may be exaggerated for clarity and convenience. In addition, terms defined in consideration of the configuration and operation of the present invention may vary depending on the intention or custom of the user, the operator, and the like. Definitions of these terms should be based on the content of this specification.

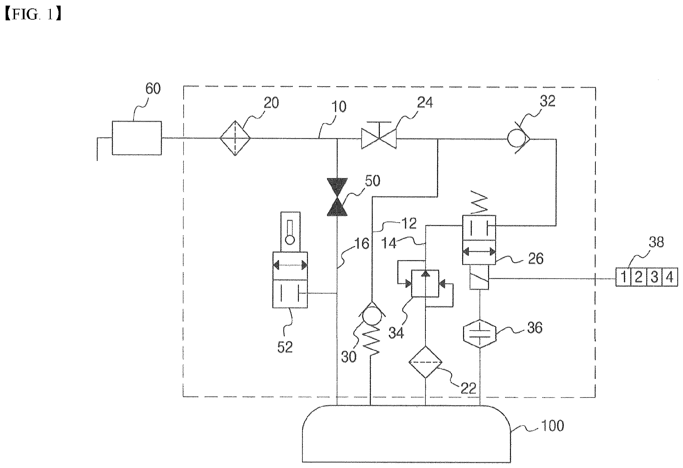

FIG. 1 is a schematic configuration diagram of a fluid control valve assembly according to an embodiment of the present invention.

A valve assembly for controlling a fluid according to an embodiment is provided. The fluid control valve assembly includes: a high-pressure container in which a hydrogen gas is stored; a first flow path 10 that is connected to a charging unit for charging the hydrogen gas into the high-pressure container and a gas consuming unit that consumes the hydrogen gas so that the hydrogen gas for charging and consuming is passed through one flow path; a second flow path 12 connected between the high-pressure container 100 and the first flow path 10 to allow the hydrogen gas to be supplied to the high-pressure container 100 during charging; a third flow path 14 connected between the high-pressure container 100 and the first flow path 10 to discharge hydrogen gas stored in the high-pressure container 100 to the gas consuming unit during consuming the hydrogen gas; and a plurality of valves mounted on the first flow path 10, the second flow path 12, and the third flow path 14 to control the flow of the fluid.

A first filter 20 for filtering hydrogen gas passing through the first flow path 10 for charging and consuming hydrogen gas is mounted on the first flow path 10, and a second filter 22 for filtering the hydrogen gas discharged from the high-pressure container 100 is mounted on the third flow path 14.

The second flow path 12 is provided with a first check valve 30 that opens the charge gas flow supplied to the high-pressure container 100 in order to charge hydrogen gas, and blocks the flow of gas opposite thereto, and the third flow path 14 is provided with a second check valve 32 that opens the discharge gas flow of the hydrogen gas stored in the high-pressure container 100 and blocks the flow of gas opposite thereto.

A manual valve 24 for manually opening and closing the first flow path 10 is mounted on the first flow path 10, and a solenoid valve 26 for automatically opening and closing the third flow path 14 according to an electrical signal is mounted on the third flow path 14.

The third flow path 14 is provided with an overflow blocking valve 34 configured to prevent a source gas inside the high-pressure container 100 from being abnormally excessively discharged when the pipe of the vehicle is broken during a vehicle accident or a rollover. The overflow blocking valve 34 may be arranged between the high-pressure container 100 and the solenoid valve 26.

The high-pressure container 100 is equipped with a temperature sensor 36 for measuring the internal temperature of the high-pressure container 100, and the temperature sensor 36 is connected to a control unit 38 for controlling the solenoid valve 26 by applying an electrical signal to the solenoid valve 26 to apply a temperature signal to the control unit 38.

A fourth flow path 16 is connected between the first flow path 10 and the high-pressure container 100, and a bleed valve 50 is mounted on the fourth flow path 16. The bleed valve 50 opens the fourth flow path 16 arbitrarily or when the pressure inside the high-pressure container is equal to or higher than a set pressure, to release the pressure of the hydrogen gas in the high-pressure container 100, and discharges the hydrogen gas in the high-pressure container 100 to the first flow path 10.

Further, the fourth flow path 16 is provided with a pressure release device 52 for discharging the pressure in the high-pressure container to the outside when the pressure in the high-pressure container 100 is increased by the temperature when a fire occurs in the vehicle accident or the vehicle.

A gas discharge outlet 60 for decompressing the high-pressure hydrogen gas stored in the high-pressure container 100 into a gas usage pressure and discharging the decompressed hydrogen gas to the outside is installed in a flow path connected to the gas consuming unit on the first flow path 10.

The fourth flow path 16 is connected to the first flow path 10 connected to the front side of the manual valve 24 so that the hydrogen gas discharged to the fourth flow path 16 is directly introduced into the gas discharge outlet 60 without passing through the manual valve 24 and is discharged to the outside through the gas discharge outlet 60.

In the valve assembly according to the present embodiment, when the fourth flow path 16 is connected to the first flow path 10 and the bleed valve 50 is mounted on the fourth flow path 16. When opening the bleed valve 50, the hydrogen gas in the high-pressure container 100 is supplied to the gas discharge outlet 60 through the fourth flow path 16 and the first flow path 10 and is then decompressed and discharged, thereby improving stability.

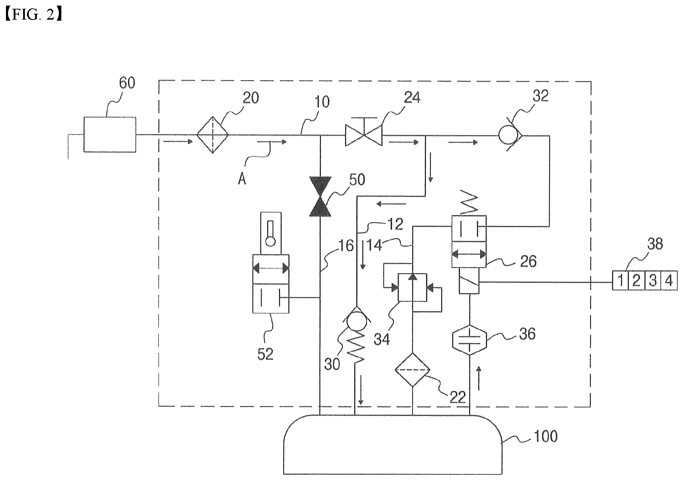

An operation of charging the valve assembly according to the present embodiment configured as described above will be described. Referring to FIG. 2, the hydrogen gas supplied through the first flow path 10 passes through the second flow path 12 and is charged in the high-pressure container 100 as shown in arrow marks A.

In this case, the flow of the gas for charging is blocked by the second check valve 32 to the third flow path 14, and the flow of the gas is blocked by the bleed valve 50 to block the flow of the gas to the fourth flow path 16.

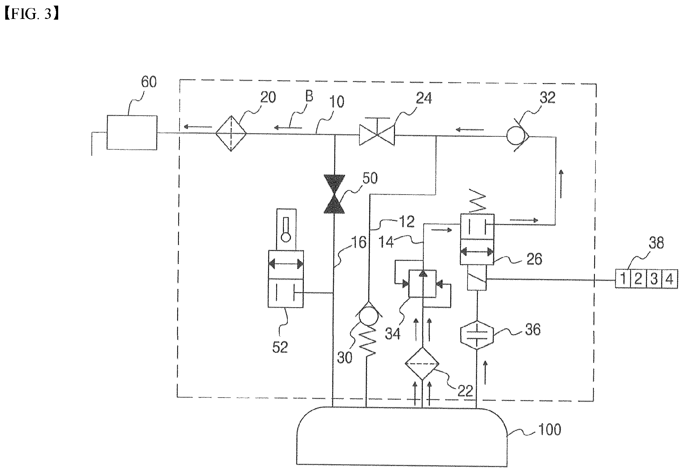

A gas flow will be described below when gas is consumed. As shown in FIG. 3, when the solenoid valve 26 is opened, the hydrogen gas stored in the high-pressure container 100 is discharged through the third flow path 14 and passes through the first flow path 10 as indicated by arrow marks B, and the high-pressure is decompressed to a gas usage pressure by a decompression device and then supplied to the gas consuming unit.

In this case, the flow of the gas for gas consumption is blocked by the first check valve 30 to block the flow of the gas to the second flow path 14.

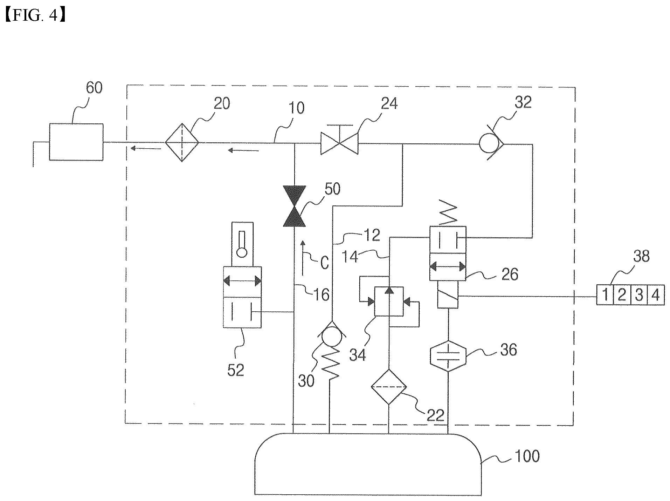

FIG. 4 shows the flow of hydrogen gas when the bleed valve 50 is operated. Referring to FIG. 4, as indicated by arrow marks C, when the bleed valve 50 is operated to open the fourth flow path 16, the hydrogen gas stored in the high-pressure container 100 is discharged through the fourth flow path 16 and flows into the first flow path 10 and is supplied to the gas discharge outlet 60. In addition, while passing through the gas discharge outlet 60, the pressure is decompressed to the gas usage pressure, and then discharged to the outside or introduced into the gas consuming unit.

In this case, the high-pressure hydrogen gas discharged through the fourth flow path 16 and introduced into the first flow path 10 is prevented from being re-introduced into the high-pressure container 100 through the first flow path 10 as the manual valve 24 is closed.

Therefore, when the high-pressure hydrogen gas stored in the high-pressure container is directly discharged, stability may be deteriorated due to high-pressure, and the valve assembly according to the present embodiment may be configured to include the bleed valve mounted on the fourth flow path connected between the first flow path and the high-pressure container to open the fourth flow path, thereby preventing the high-pressure hydrogen gas stored in the high-pressure container from being directly discharged to the outside.

While the present invention has been particularly shown and described with reference to exemplary embodiments thereof, by way of illustration and example only, it is clearly understood that the present invention is not to be construed as limiting the present invention, and various changes and modifications may be made by those skilled in the art within the protective scope of the invention without departing off the spirit of the present invention.

### INDUSTRIAL APPLICABILITY

When a hydrogen gas is charged into a high-pressure container in a hydrogen fuel cell system or when a hydrogen gas stored in a high-pressure container is supplied to a gas consuming unit, the fluid control valve assembly according to the present invention may be applied for fluid control for controlling the flow of the source gas.

## Claims

1. A valve assembly for controlling a fluid, the fluid control valve assembly comprising:
a high-pressure container in which a hydrogen gas is stored;
a first flow path that is connected to a charging unit for charging the hydrogen gas into the high-pressure container and a gas consuming unit that consumes the hydrogen gas so that the hydrogen gas for charging and consuming is passed through one flow path;
a second flow path connected between the high-pressure container and the first flow path to allow the hydrogen gas to be supplied to the high-pressure container during charging;
a third flow path connected between the high-pressure container and the first flow path to discharge hydrogen gas stored in the high-pressure container to the gas consuming unit during consuming the hydrogen gas;
a manual valve mounted on the first flow path to manually open and close the first flow path;
a solenoid valve mounted on the third flow path to automatically open and close the third flow path;
a fourth flow path connected between the high-pressure container and the first flow path; and
a bleed valve mounted on the fourth flow path and configured to open and close the fourth flow path to discharge, through the first flow path, the hydrogen gas in the high-pressure container.

2. The fluid control valve assembly of claim 1, wherein the second flow path and the third flow path are connected to the first flow path at a rear side of the manual valve, and the fourth flow path is connected to the first flow path at a front side of the manual valve.

3. The fluid control valve assembly of claim 1, wherein, when a pressure release device is mounted on the fourth flow path and the pressure of the high-pressure container is increased by the temperature, the pressure inside the high-pressure container is discharged to the outside.

4. The fluid control valve assembly of claim 1, wherein a first check valve that opens the flow of the hydrogen gas supplied to the high-pressure container and blocks an opposite flow is mounted on the second flow path, and a second check valve that opens the flow of the hydrogen gas discharged from the high-pressure container and blocks an opposite flow is mounted on the third flow path.

5. The fluid control valve assembly of claim 1, wherein a gas discharge outlet for decompressing the high-pressure hydrogen gas discharged from the high-pressure container to a gas usage pressure and discharging the decompressed hydrogen gas is installed in a flow path connected to the first flow path to supply hydrogen gas to the gas consuming unit, and when the bleed valve is operated in an opening direction, the high-pressure hydrogen gas discharged through the fourth flow path passes through the first flow path and be discharged to the outside through the gas discharge outlet.
